# EUROPEAN PATENT SPECIFICATION

(11) **EP 2 336 857 B1**
(45) Date of publication and mention of the grant of the patent: **07.09.2016**
(21) Application number: 10192545.1
(22) Date of filing: 25.11.2010
(51) Int. Cl.: G06F 3/041, G06F 3/042

(54) **Method of driving touch screen display apparatus, touch screen display apparatus adapted to execute the method and computer program product for executing the method**
Verfahren zur Ansteuerung einer Anzeigevorrichtung mit Berührungsbildschirm sowie Anzeigevorrichtung und Computerprogrammprodukt zur Durchführung des Verfahrens
Procédé de commande d'appareil d'affichage à écran tactile, appareil à affichage d'écran tactile correspondant et produit programme informatique correspondant

(30) Priority: 26.11.2009 KR 20090115185
(43) Date of publication of application: 22.06.2011
(73) Proprietor: Samsung Display Co., Ltd., Gyeonggi-do (KR)
(72) Inventor: Kim, Tae-Jin, Gyunggi-Do 446-711 (KR); Jeong, Joo-Hyeon, Gyunggi-Do 446-711 (KR); Park, Yong-Sung, Gyunggi-Do 446-711 (KR); Ku, Ja-Seung, Gyunggi-Do 446-711 (KR)
(74) Representative: Gulde & Partner

(56) References cited:
- WO-A1-2009/084629
- US-A1- 2008 048 994

## Description

### BACKGROUND

### 1. Technical Field

Embodiments of the present invention relate to a method of driving a touch screen display apparatus for inputting information using a photo sensor array, a medium for recording the method, and a touch screen display apparatus.

### 2. Description of Related Art

Generally, an important function of display apparatuses is to clearly display an image. Recently, however, display apparatuses have been suitably developed so that they can also receive information from humans by being touched by them. Touch screen displays, as an example of this technology, have been embodied using various suitable methods. Technologies for manufacturing a touch screen panel built-in (or built into) a liquid crystal display (LCD) have been developed, and these technologies may be used with the manufacturing of other suitable display devices. In particular, these technologies may also be used with the manufacturing of an organic light-emitting diode (OLED) display device that has attracted attention as a next generation display apparatus. In US 2008/0048994 A1 a liquid display device is disclosed, which has a touch panel function and method for detecting a touch position. In WO 2009/084629 A1 a display penal is disclosed, which comprises built-in optical sensors, in which the noise component of the imaging signals of image capturing sensors in a display area can be eliminated with high accuracy.

### SUMMARY OF THE INVENTION

Aspects of embodiments of the present invention are directed toward a touch screen display apparatus that may accurately recognize the touch by an object and a touch location of the object, and may effectively calculate the touch location.

Aspects of embodiments of the present invention are directed toward a touch screen display apparatus that may accurately calculate a touch location of an object by effectively removing noise of a sensing signal provided from a photo sensor.

According to an embodiment of the present invention, there is provided a method of driving a touch screen display apparatus including a touch detector for detecting a touch by an object and a panel including a photo sensor unit for capturing an image of the object and a light emitting unit for realizing an image to be displayed, the method comprising steps according to claim 1.

The touch location of the object may be calculated during the enable period of the output signal.

The enable period during which the removing occurs may follow the disable period during which the updating occurs.

The method may further include detecting a temperature of the panel, wherein the updating includes updating the noise determination reference so as to correspond to the detected temperature.

The method may further include comparing the detected temperature with a reference temperature, wherein, when the detected temperature is higher than the reference temperature, the updating the noise determination reference includes removing noise due to heat.

The method may further include detecting an illumination level, wherein the updating includes updating the noise determination reference so as to correspond to the detected illumination level.

The method may further include comparing the detected illumination level with a reference illumination level, wherein, when the detected illumination level is less than the reference illumination level, the updating the noise determination reference includes removing noise due to a low illumination level.

The method may further include determining whether the input signal is in a drag mode in which the input signal is consecutively enabled, wherein the converting is performed when the input signal is in the drag mode.

According to another embodiment of the present invention, there is provided a computer readable recording medium having recorded (or embedded) thereon a program for executing the method.

According to another embodiment of the present invention, there is provided a touch screen display apparatus according to claim 9.

The touch location calculator may be configured to, during the enable period, calculate the touch location of the object.

The noise remover may be configured to remove the noise from the sensing signal during the enable period of the enable periods of the output signal following the at least one disable period of the output signal, wherein the updating unit may be configured to update the noise determination reference during the at least one disable period of the output signal.

The touch screen display apparatus may further include a temperature detector for detecting a temperature of the panel, wherein the updating unit may be configured to update the noise determination reference so as to correspond to the detected temperature during the at least one disable period of the output signal.

The touch screen display apparatus may further include a first comparison unit for comparing the detected temperature with a reference temperature, wherein the updating unit may be configured to update the noise determination reference so as to remove noise due to heat when the detected temperature is higher than the reference temperature.

The touch screen display apparatus may further include an illumination level detector for detecting an illumination level, wherein the updating unit may be configured to update the noise determination reference so as to correspond to the detected illumination level during the at least one disable period of the output signal.

The touch screen display apparatus may further include a second comparison unit for comparing the detected illumination level with a reference illumination level, wherein the updating unit may be configured to update the noise determination reference so as to remove noise due to a low illumination level when the detected illumination level is less than the reference illumination level.

The touch screen display apparatus may further include a drag mode determination unit for determining whether the input signal is in a drag mode in which the input signal is consecutively enabled, wherein the signal converter may be configured to convert the input signal into the output signal when the input signal is in the drag mode.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 shows a cross sectional view of a case where a touch screen display apparatus is touched by an object, according to an embodiment of the present invention;
FIG. 2 is a block diagram of a touch screen display apparatus according to an embodiment of the present invention;
FIG. 3 is a block diagram of a touch screen display apparatus according to another embodiment of the present invention;
FIG. 4 is a block diagram of a touch screen display apparatus according to another embodiment of the present invention;
FIG. 5 shows (a) a waveform diagram of an input signal generated by a touch detector, (b) a waveform diagram of a reference signal having a plurality of enable periods and at least one disable period, and (c) a waveform diagram of an output signal generated by calculating the input signal and the reference signal, according to an embodiment of the present invention;
FIG. 6 is a flowchart of a method of driving a touch screen display apparatus, according to an embodiment of the present invention;
FIG. 7 is a flowchart of a method of driving a touch screen display apparatus, according to another embodiment of the present invention;
FIG. 8 is a flowchart of a method of driving a touch screen display apparatus, according to another embodiment of the present invention; and
FIG. 9 is a flowchart of a method of driving a touch screen display apparatus, according to another embodiment of the present invention.

### DETAILED DESCRIPTION

In the following detailed description, only certain exemplary embodiments of the present invention are shown and described, by way of illustration. As those skilled in the art would recognize, the invention may be embodied in many different forms and should not be construed as being limited to the embodiments set forth herein. Also, in the context of the present application, when a first element is referred to as being "on" a second element, it can be directly on the second element or be indirectly on the second element with one or more intervening elements interposed therebetween. Like reference numerals designate like elements throughout the specification.

A method of driving a touch screen display apparatus and a touch screen display apparatus will be described with regard to exemplary embodiments of the invention with reference to drawings.

In a touch screen display apparatus using a photo sensor method, a photo sensor is disposed in a pixel, and information is input by light through a screen. In such an apparatus, a photodiode is used as the photo sensor, and a capacitor is connected to the photodiode in each pixel. In addition, by changing the quantity of charge in the capacitor according to the intensity of light received by the photodiode so as to detect a voltage between the ends of the capacitor, data of a captured image is generated. Here, a touch screen function or a digitizer function may be an application of the touch screen display apparatus using the photo sensor method. The touch screen function is realized by detecting a shadow of an object such as a finger so as to receive input information. In this case, the input information is recognized using various image recognition algorithms. However, complex image recognition algorithms and extensive calculating operations may not be supported by hardware.

In addition, in touch operations, such as click, double click, and drag operations may be used in the touch screen display apparatus using the photo sensor method. However, even if the touch screen display apparatus is not actually touched by a finger, the touch screen display apparatus may erroneously determine that the touch by the finger occurred, and thus the touch may not be accurately determined or detected.

Also, in a touch screen display apparatus using the photo sensor method, noise may be generated from the external surroundings such as low illumination levels or high temperature conditions. For example, since the sensitivity of a photo sensor is not good at low illumination levels, a difference between sensing data and noise data may be small. Thus, if a noise determination reference is previously set (or calibrated) so as to correspond to (or based on) a high illumination level condition, then in low illumination conditions the difference between the sensing data and the noise data may not be obvious, therefore making it difficult to calculate a touch location of the object. In addition, when the touch screen display apparatus is in a high temperature condition (i.e., is warm or hot) due to the external surroundings or heat generated due to touch, if a noise determination reference corresponding to a low temperature condition is used, it may also be difficult to calculate a touch location of the object.

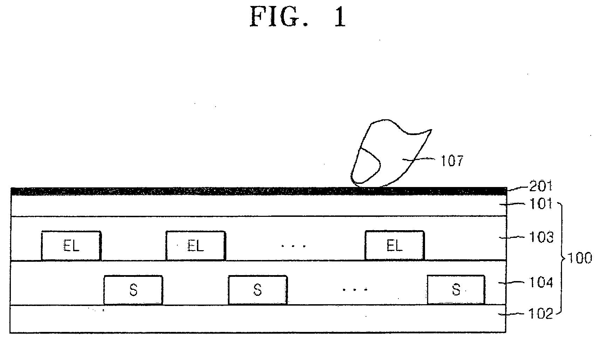

FIG. 1 shows a case where a touch screen display apparatus is touched by an object such as a finger 107, according to an embodiment of the present invention. According to one embodiment, the touch screen display apparatus includes a contact detecting layer for detecting whether the touch screen display apparatus is touched by the object such as the finger 107. According to one embodiment, the contact detecting layer is a touch layer 201 that uses a capacitance method to detect contact, but embodiments of the present invention are not limited thereto. That is, various touch layers for detecting whether the touch screen display apparatus is touched by the finger 107 may be used, and these layers may use a pressure sensitive, ultra violet (UV), resistance (or resistive), and/or surface wave methods.

Referring to FIG. 1, the touch screen display apparatus includes a panel 100 composed of a plurality of light emitting units EL and a plurality of photo sensor units S which are disposed between a first substrate 101 and a second substrate 102. The touch screen display apparatus includes the touch layer 201 that uses a capacitance method and is disposed on the panel 100.

The first substrate 101 and the second substrate 102 may each be formed of a glass material, a metal material, and/or a plastic material. The photo sensor unit S includes a photodiode and transistors, and the light emitting unit EL includes an organic light-emitting diode (OLED) and transistors formed on the second substrate 102. FIG. 1 shows an example where the light emitting units EL and the photo sensor units S are alternately arranged. Alternatively, the light emitting units EL and the photo sensor units S may be arranged in other suitable ways. FIG. 1 shows the arrangement of main components (of the touch screen display apparatus) which include the light emitting units EL and the photo sensor units S. However, wirings connecting the main components and insulating layers insulating the wirings may not explicitly divide (or separate) the light emitting units EL and the photo sensor units S, or alternatively may be suitably shared by the light emitting units EL and the photo sensor units S, as illustrated in FIG. 1.

The light emitting unit EL emits light according to display data and control signals so as to realize an image (e.g., a predetermined image) on the panel 100. The light emitting unit EL of the touch screen display apparatus may include an OLED as a light emitting device. The OLED includes a pixel electrode (an anode), a counter electrode (a cathode) facing the pixel electrode, and an intermediate layer which includes a light emitting layer and which is interposed between the pixel electrode and the counter electrode. The OLED and the transistors included in the light emitting unit EL are similar to the photodiode and the transistors included in the photo sensor unit S, respectively, and thus the photo sensor unit S is easily inserted (or incorporated) into the panel 100. Accordingly, the panel 100 may be thin and may be easily manufactured.

Since the photo sensor unit S includes the photodiode, the photo sensor unit S generates (or causes a change in) a photoelectric current when receiving light. Thus, when the touch screen display apparatus is touched by an object such as the finger 107, the photo sensor unit S may generate a photoelectric current, wherein the photo sensor unit S corresponds to a portion where a shadow image of the finger 107 is not formed by available light. The photoelectric current is output from the photo sensor unit S, and then a location determining unit calculates coordinates of a portion touched by the finger 107 by analyzing the shadow image, analyzing amounts of light sensed by the photo sensor units S to form a binary image, or analyzing an amount of light reflected by an internal light source to form an image (e.g., a binary image) of the object such as the finger 107. The photo sensor unit S may include a PIN-type photodiode.

The first substrate 101 may be disposed above the light emitting unit EL and the photo sensor unit S, and the touch layer 201 may be formed on the first substrate 101. The touch layer 201 is formed as a transparent film so as to increase transmissivity (or transmittance), thus reducing a deterioration of the efficiency of the touch screen display apparatus. In addition, the touch layer 201 uses a capacitance method to determine whether the touch layer 201 is touched by an object. When the touch layer 201 is touched by the object, a change in capacitance occurs. When the capacitance detected by the touch layer 201 is greater or smaller than a threshold capacitance (e.g., a threshold capacitance that is previously set), the touch layer 201 determines that the touch layer 201 has been touched by the object. In this case, the touch layer 201 may include electrodes facing each other and a dielectric layer disposed between the electrodes. Alternatively, the touch layer 201 may include an electrode and a dielectric layer disposed below the electrode, and may use, as another electrode, the cathode of the OLED included in the light emitting unit EL of the panel 100. In the latter case, compared to the former case, the thickness of the touch layer 201 is reduced, and the number of layers included in the touch layer 201 is reduced, thereby improving image quality and productivity. In one embodiment, the touch layer 201 may be formed only on one surface of the panel 100, but embodiments of the present invention are not limited thereto. Alternatively, the touch layer 201 may be included in (or incorporated into) a substrate of the panel 101 during the manufacture (or manufacturing process) of the panel 100.

According to one embodiment, in the touch screen display apparatus having a function of inputting information to a screen by light, by configuring the touch layer 201 as described above, an image may be analyzed based on a sensing signal output from the photo sensor unit S. That is, instead of a complicated image analysis method which determines whether a touch occurs by detecting edges of a captured image of the shadow of an object (e.g., a finger 107) and then detecting a touch when the edges of the captured image move outward (e.g., when the shadow of the object becomes larger), the touch screen display apparatus may instead determine whether a touch occurs by detecting a change in capacitance when the touch layer 201 is touched by the finger 107, and the coordinates of a touch location may be calculated using the sensing signal provided from the photo sensor S. Thus, determining whether a touch occurs and calculating a touch location may be separately performed. In addition, it is easy to calculate the touch location by using the sensing signal that is output from the photo sensor unit S according to information that the touch layer 201 is touched by the finger 107.

Some touch screen display apparatuses use an alternative method of detection touch which includes the steps of inputting information on a screen by using light, detecting edges of a captured image of the shadow of an object, and determining whether the edges become more distinct (or when the shadow becomes larger). In this case, when the edges become more distinct (or when the shadow becomes larger), it is determined that the screen is touched by an object. In addition, when it is determined that the screen is touched by the object, the coordinates of the captured image are obtained by calculating the centroid (or center) of the detected edges. However, according to one embodiment of the present invention, because the touch screen display apparatus may determine whether touch by an object such as a finger occurs using the touch layer 201, which is a simpler method than the above-described alternative method, central processing unit (CPU) and memory demands may be less (or lower) than in the alternative method. In the alternative method, even if the touch screen display apparatus is not actually touched, a touch may be erroneously detected; however, according to this embodiment, this problem may be reduced or prevented.

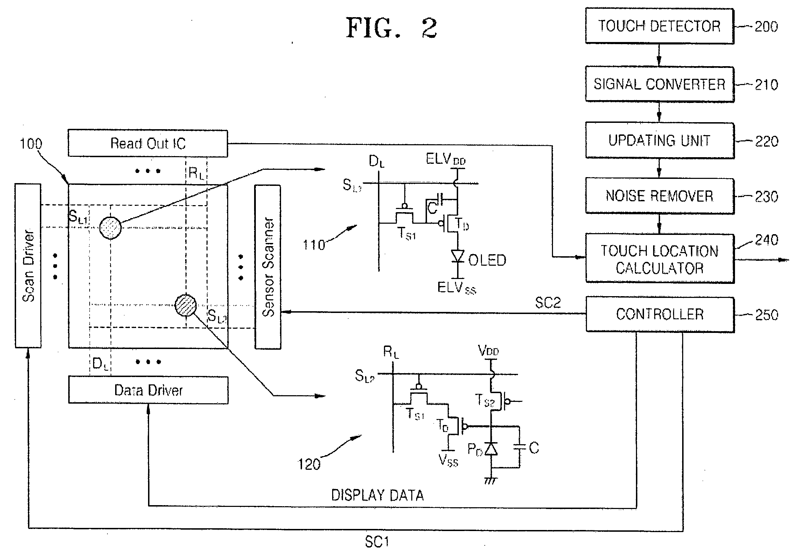

FIG. 2 is a diagram of a touch screen display apparatus according to an embodiment of the present invention.

Referring to FIG. 2, the touch screen display apparatus includes a panel 100 and driving units for driving the panel 100.

The panel 100 includes a light emitting unit 110 and a photo sensor unit 120. The light emitting unit 110 includes a light emitting device, for example, an OLED. The photo sensor unit 120 includes a photo sensor P_{D} for capturing an image of an object. The photo sensor P_{D} may include a PIN-type photodiode.

For example, the light emitting unit 110 includes a data line D_{L} for transmitting display data and a first scanning line S_{L1} crossing the data line D_{L} for transmitting a scan signal. The data line D_{L} is connected to a data driver so as to receive the display data. The first scanning line S_{L1} receives the scan signal from a scan driver. The display data and the scan signal are provided from a controller 250.

The light emitting unit 110 may include a first transistor T_{S1} controlled by the scan signal of the first scanning line S_{L1} to transmit the display data from the data line D_{L}. The display data transmitted through the first transistor T_{S1} is input to a gate terminal of a driving transistor T_{D}. A first driving voltage ELV_{DD} is input to one terminal (e.g., a first terminal) of the driving transistor T_{D}. A capacitor C is disposed between the one terminal (e.g., the first terminal) of the driving transistor T_{D} and the gate terminal of the driving transistor T_{D}. The capacitor C maintains a voltage corresponding to the display data and the first driving voltage ELV_{DD} for a period of time (e.g., a predetermined period of time). An anode terminal of the OLED is connected to the other terminal (e.g., a second terminal) of the driving transistor T_{D}. A second driving voltage ELVₛₛ is input to a cathode terminal of the OLED. A current corresponding to the display data may be output through the other terminal of the driving transistor T_{D}, and the OLED may emit light corresponding to the amount of the current. Here, a pixel circuit of the light emitting unit 110 may use a voltage driving method, but embodiments of the present invention are not limited thereto. For example, a pixel circuit may use a current driving method instead of a voltage driving method. In addition, the pixel circuit may include a plurality of transistors and one or more capacitors in order to compensate for a threshold voltage of the driving transistor T_{D}.

The photo sensor unit 120 includes a second scanning line S_{L2} and an output line R_{L} connected to the second scanning line S_{L2}. The second scanning line S_{L2} is connected to a sensor scanner so as to receive a scan signal. The output line R_{L} is connected to a read out integrated circuit (ROIC). The ROIC collects sensing signals output from the output line R_{L}, and the sensing signals are transmitted to a touch location calculator 240. Thus, the touch location calculator 240 may determine a touch location of the object based on the sensing signals.

The photo sensor unit 120 includes the photo sensor P_{D} for converting an optical signal input thereto into an electric signal. In some embodiments, the photo sensor P_{D} is a photodiode. A gate terminal of a driving transistor T_{D} is connected to a cathode terminal of the photodiode. A second transistor T_{S2} which is provided and configured to allow a current to flow according to a reset signal and to transmit a first driving voltage V_{DD} to the gate terminal of the driving transistor T_{D}. A second driving voltage V_{SS} is input to one terminal (e.g., a first terminal) of the driving transistor T_{D}. The photo sensor P_{D} receives light so that a current flows from its anode terminal towards its cathode terminal, thereby reducing a voltage input to the gate terminal of the driving transistor T_{D}. The driving transistor T_{D} may output, to the output line R_{L} through a first transistor T_{S1}, a current corresponding to a voltage of the gate electrode, which, in turn, varies according to the current generated by the photo sensor P_{D} and the second driving voltage V_{SS} input to the one terminal (e.g., the first terminal). In order to output the current, the first transistor T_{S1} may receive the scan signal from the second scanning line S_{L2} so that the current output by the driving transistor T_{D} flows through the first transistor T_{S1}.

The ROIC collects sensing signals output from the output line R_{L} and outputs the sensing signals to the touch location calculator 240. Thus, the touch location calculator 240 may determine a touch location based on the sensing signals. The touch location calculator 240 may analyze an image of the object according to the sensing signals and may determine the touch location from the image of the object.

The touch screen display apparatus includes a touch detector 200 for determining whether the touch screen display apparatus is touched by the object, a signal converter 210 for converting an input signal generated by the touch detector 200 so as to generate an output signal, an updating unit 220 for updating a noise determination reference of the sensing signal provided from the photo sensor unit 120 during a disable period of the output signal, and a noise remover 230 for removing noise of the sensing signal during an enable period of the output signal according to the updated noise determination reference. In addition, the touch screen display apparatus may further include the touch location calculator 240 for determining the touch location by using the sensing signal on which a process of removing noise is performed.

In addition, the touch detector 200 includes the touch layer 201 of FIG. 1 and an input signal generator. The touch detector 200 detects a change in capacitance of the touch layer 201. The input signal generator generates an input signal corresponding to the change in capacitance. Thus, the touch detector 200 may determine whether the touch screen display apparatus was touched by the object.

The input signal output from the touch detector 200 is input to the signal converter 210. The signal converter 210 converts the input signal to the output signal having a plurality of enable periods and at least one disable period. While the touch screen display apparatus is being touched, the input signal may be consecutively generated as an enable signals for a period of time (e.g., a predetermined period of time). The input signal that is consecutively enabled for the period of time may be compared with a reference (e.g., a predetermined reference), and may be used to determine whether the touch screen display apparatus is touched by the object during an initial period of time. However, during a period of time after the initial period of time, the touch screen display apparatus may be under different surroundings (or in different conditions) from those of the initial period of time, such that if the same method that was used in the initial period of time is used again to determine whether the touch screen display apparatus is touched, then the result may be different from that of the initial period of time. Thus, according to one embodiment, in order to divide the input signal generated by a single touch into a plurality of periods, the input signal is converted into an output signal having a plurality of enable periods and at least one disable period therebetween.

The output signal is input to the updating unit 220. The updating unit 220 updates the noise determination reference during the disable period of the output signal. The updating unit 220 determines noise that may be generated according to internal and external surroundings (or conditions) of the touch screen display apparatus and may update the noise determination reference for offsetting the noise. For example, as will be described in more detail later, when the temperature of the panel 100 increases so as to correspond to a high temperature condition, a noise determination reference corresponding to the high temperature condition is obtained, and then the updating unit 220 updates the noise determination reference to the obtained noise determination reference corresponding to the high temperature condition. A noise determination reference according to temperature may be also previously stored. For example, a database of noise data in the sensing signal according to a temperature condition may be previously stored, and noise data corresponding to a detected temperature may be obtained. In this case, a noise determination reference may be updated by obtaining noise data corresponding to a detected temperature. As another example, noise removing algorithms according to temperature may be previously stored, and a noise removing algorithm corresponding to a detected temperature may be obtained. In this case, a noise determination reference may be updated by using a noise removing algorithm. Also, under a low temperature condition, a first noise removing algorithm may be selected and used. However, under a high temperature condition, a second noise removing algorithm may be selected and used. The updating unit 220 may update (or change from) the first noise removing algorithm to the second noise removing algorithm during the disable period of the output signal according to a change in temperature.

The noise remover 230 may remove noise from the sensing signals collected from the photo sensor unit 120. The noise remover 230 may remove noise according to noise data and/or a noise removing algorithm, which is obtained (or determined) by the updating unit 220. The touch location calculator 240 may calculate a touch location using the sensing signal from which noise is removed. The operations of removing noise and calculating a touch location may be performed during the enable period of the output signal.

The touch screen display apparatus includes the controller 250 for transmitting scan signal SC1, scan signal SC2, and display data to the scan driver, the sensor scanner, and the data driver, respectively.

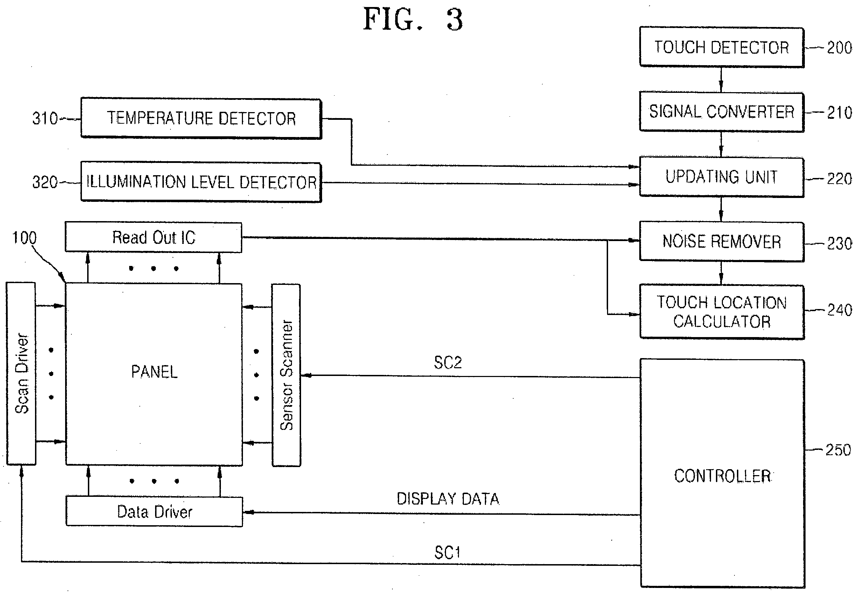

FIG. 3 is a block diagram of a touch screen display apparatus according to another embodiment of the present invention. The touch screen display apparatus according to this embodiment will be described in terms of its differences from the embodiment shown in FIG. 2.

Referring to FIG. 3, the touch screen display apparatus includes a panel 100, a data driver for driving a light emitting unit of the panel 100 so as to emit light, a scan driver, and a sensor scanner for driving a photo sensor unit of the panel 100 so as to perform a sensing operation. Sensing signals generated by the photo sensor unit of the panel 100 are output to a Read Out IC ROIC. The ROIC collects the sensing signals and transmits the sensing signals to the noise remover 230. The noise remover 230 removes noise from the sensing signals. Then, the sensing signals from which noise is removed are transmitted to the touch location calculator 240. The touch location calculator 240 calculates a touch location of an object based on the sensing signals.

According to the embodiment shown in FIG. 3, a noise determination reference for removing noise of a sensing signal is updated according to internal and external conditions. Thus, the touch screen display apparatus further includes at least one of a temperature detector 310 for detecting a temperature of the panel 100 and an illumination level detector 320 for detecting an external illumination level of the panel 100.

The temperature detector 310 may include a first comparison unit for comparing a detected temperature with a reference temperature. In addition, the illumination level detector 320 may include a second comparison unit for comparing a detected illumination level with a reference illumination level.

When the detected temperature is higher than the reference temperature, a temperature condition of the panel 100 is determined to be a high temperature condition, and a signal corresponding to the high temperature condition is transmitted to the updating unit 220 as a determination result of the first comparison unit. The updating unit 220 may determine a noise determination reference (e.g., reference data, a noise removing algorithm, etc.) corresponding to the high temperature condition and may set the current noise determination reference as the determined noise determination reference. As such, when the current noise determination reference is previously set, the current noise determination reference may be updated by resetting the current noise determination reference.

When the detected illumination level is lower than the reference illumination level, an illumination level condition of the panel 100 is determined to be a low illumination level condition, and a signal corresponding to the low illumination level condition is transmitted to the updating unit 220 as a determination result of the second comparison unit. Like in the first comparison unit, the updating unit 220 may determine a noise determination reference corresponding to the low illumination level condition and may set the current noise determination reference as the determined noise determination reference.

The updating unit 220 updates a noise determination reference during a disable period of the output of the signal converter 210. In order to provide the output signal, the touch detector 200 generates an input signal when the touch by an object occurs, and the signal converter 210 converts the input signal into the output signal. In this case, the output signal may include a plurality of enable periods and at least one disable period. Thus, the updating unit 220 updates a noise determination reference during the disable period of the output signal. The noise remover 230 may remove noise of the sensing signal (according to a noise determination reference that is updated) during an enable period directly after the disable period of the output signal for which the noise determination reference is updated.

As such, according to some embodiments, a touch location may be accurately calculated by adjusting a noise determination reference according to a temperature and/or illumination level condition of the panel 100.

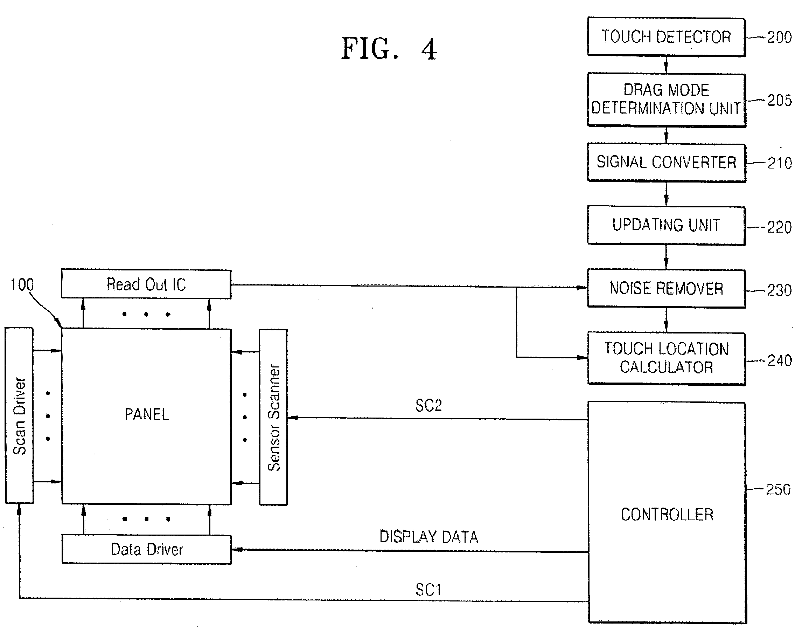

FIG. 4 is a block diagram of a touch screen display apparatus according to another embodiment of the present invention. The touch screen display apparatus according to one embodiment further includes a drag mode determination unit 205 in addition to the elements of the touch screen display apparatus of FIG. 2.

The drag mode determination unit 205 determines a drag mode by using an input signal provided from the touch detector 200. The drag mode refers to a case where a touch by an object occurs for a period of time (e.g., a predetermined period of time) or more and an operation of the touch screen display apparatus corresponds to the drag mode. For example, when the input signal is in an enable period for a period of time, the drag mode determination unit 205 in one embodiment is utilized to determine when the input signal is in the drag mode.

In the drag mode, the signal converter 210 may convert the input signal into an output signal having a plurality of enable periods and at least one disable period therebetween.

A noise determination reference is updated using the converted output signal, the noise of a sensing signal is removed according to the updated noise determination reference, and then a touch location of the object is calculated based on the sensing signal from which noise is removed.

Although a temperature detector and an illumination level detector are not illustrated in FIG. 4, the touch screen display apparatus of FIG. 4 may further include at least one of the temperature detector and the illumination level detector, and a noise determination reference may be updated so as to correspond to a high temperature condition and/or a low illumination level condition, as described above with reference to FIG. 3.

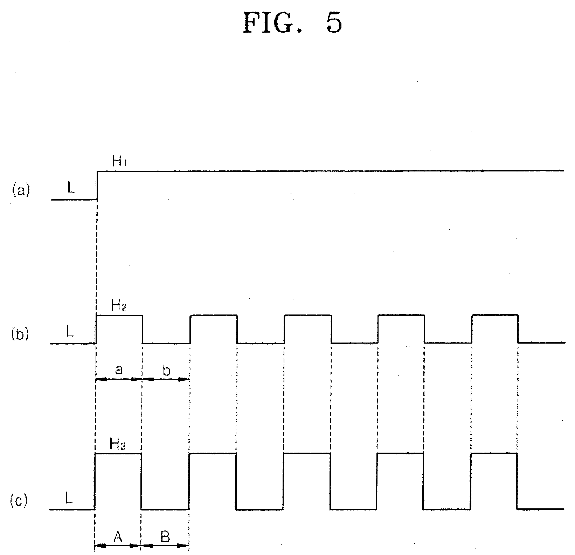

FIG. 5 shows (a) a waveform diagram of an input signal generated by a touch detector, (b) a waveform diagram of a reference signal having a plurality of enable periods and at least one disable period, and (c) a waveform diagram of an output signal generated by calculating the input signal and the reference signal, according to an embodiment of the present invention.

Referring to FIG. 5 (a), when the touch detector detects touch by an object, the touch detector generates an input signal that changes from a first level 'L' to a second level 'H₁'. In a drag mode, the touch detector generates an input signal that maintains the second level 'H₁' for a period of time (e.g., a predetermined period of time).

Referring to FIG. 5 (b), the reference signal changes from the first level 'L' to a third level 'H₂' on a clock-by-clock basis. A signal period of the first level 'L' is a disable period 'b', and a signal period of the third level 'H₂' is an enable period 'a'.

As an example where a signal converter generates an output signal, the signal converter may generate an output signal having a plurality of enable periods 'A' and a disable period therebetween by performing an 'AND' (or multiplication) operation on (or to combine) the input signal (a) and the reference signal (b). The output signal has the waveform diagram of FIG. 5 (c). The output signal is obtained by performing an 'AND' (or multiplication) operation on the input signal and the reference signal. During the enable period 'A', a signal of a fourth level 'H₃', which is the sum (or product) of the second level 'H₁' and the third level 'H₂', may be formed.

By calculating a touch location according to sensing signals collected during the enable period 'A' of the output signal, as described above, a touch location may be accurately calculated. In addition, in a drag mode in which a touch by an object is maintained for a period of time (e.g., a predetermined period of time), when it is determined whether a touch by an object occurs, errors due to external surrounding conditions may be reduced or prevented by updating a reference value for determining whether the touch by an object occurs according to the external surrounding conditions during the disable period 'B' of the output signal.

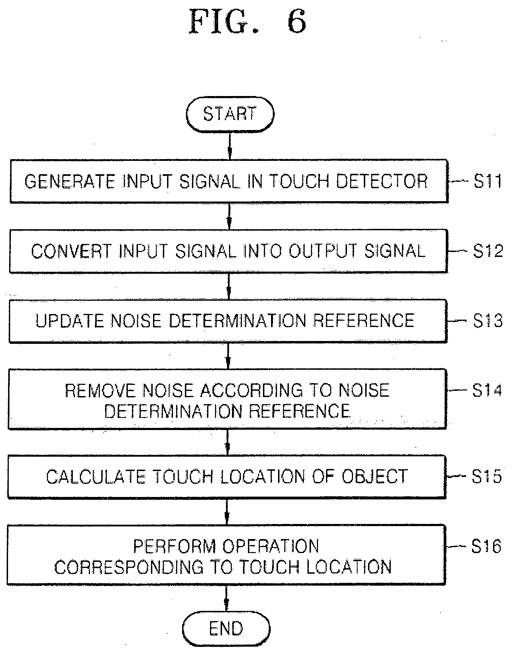

A method of driving a touch screen display apparatus including a touch detector for detecting a touch by an object, a photo sensor unit for capturing an image of the object, and a light emitting unit for realizing the image will be described with reference to FIG. 6.

FIG. 6 is a flowchart of a method of driving a touch screen display apparatus according to an embodiment of the present invention.

Referring to FIG. 6, when a touch by an object occurs, a touch detector generates an input signal (S11). When a touch layer using a capacitance method is used, the touch detector may generate an input signal corresponding to a change in capacitance. When a touch layer using a resistance layer method is used, the touch detector may generate an input signal corresponding to a change in resistance. Thus, the touch detector may generate an input signal corresponding to a change according to a method used in a touch layer of determining a touch by an object by utilizing a touch layer.

The input signal is consecutively enabled during the touch by an object. The input signal is converted into an output signal having a plurality of enable periods and a disable period therebetween (S12). The output signal may be generated by performing an AND (or multiplication) operation on the input signal and a reference signal having a plurality of enable periods and at least one disable period therebetween.

A noise determination reference is updated during the disable period of the output signal (S13).

During an enable period directly after the disable period, noise of sensing signals provided from a photo sensor unit is removed according to the updated noise determination reference (S14).

A touch location of the object is calculated using the sensing signals from which noise is removed (S15). The touch location of the object may be calculated during the enable period of the output signal.

An operation corresponding to the touch location of the object is performed (S16).

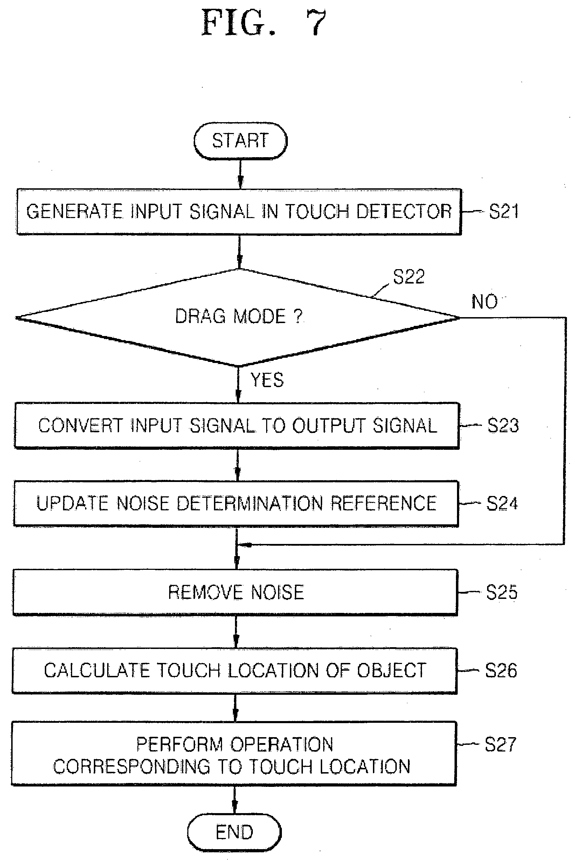

FIG. 7 is a flowchart of a method of driving a touch screen display apparatus, according to another embodiment of the present invention. The method shown in FIG. 7 includes updating a noise determination reference in a drag mode.

Referring to FIG. 7, when a touch by an object occurs, a touch detector generates an input signal (S21).

It is determined whether the touch by an object is dragged, that is, whether an input signal is in a drag mode, according to the input signal (S22). As a method of determining whether the input signal is in the drag mode according to the input signal, when the input signal is consecutively enabled for a period of time (e.g., a predetermined period of time), it may be determined that the input signal is in the drag mode. The period of time may be previously determined from general experience by a manufacturer or a user, or may be automatically updated.

In a case of the drag mode, the input signal is converted into an output signal (S23). As an example, an output signal having a plurality of enable periods and at least one disable period therebetween may be generated by performing an AND operation on (or multiplying) the input signal and an internal clock signal. The enable periods and the at least one disable period of the output signal may be the same as enable periods and at least one disable period of the internal clock signal, respectively.

During a disable period of the output signal, a noise determination reference is updated (S24).

During an enable period of the output signal, noise of sensing signals is removed according to the updated noise determination reference.

When the input signal is not in the drag mode, noise is removed according to a noise determination reference that is previously set (S25).

After removal of noise, a touch location is calculated according to the sensing signals (S26). An operation corresponding to the calculated touch location is performed (S26).

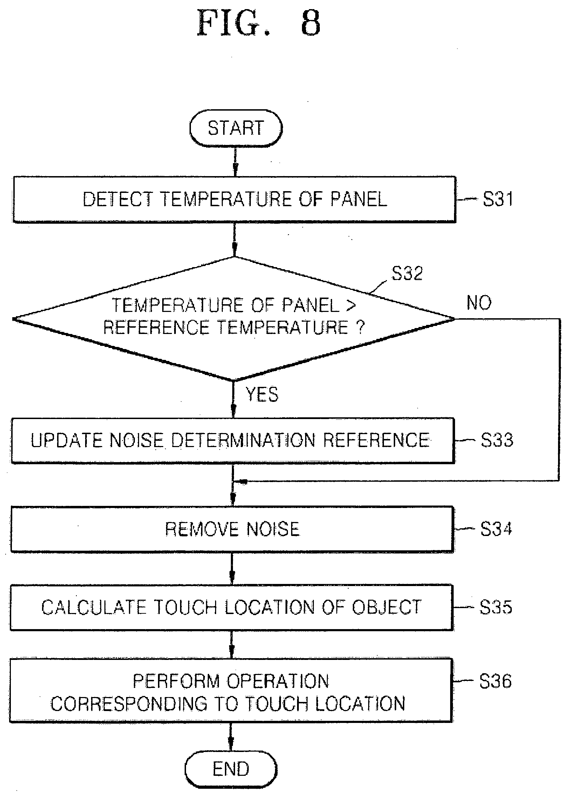

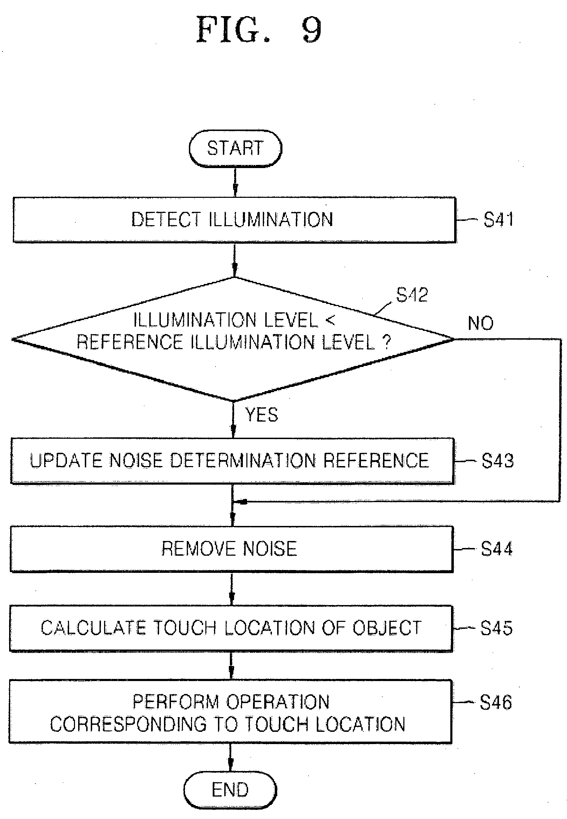

FIGS. 8 and 9 are flowcharts of methods of updating a noise determination reference according to internal and external conditions of a panel, included in the methods of FIGS. 6 and 7, according to embodiments of present invention.

Referring to FIG. 8, a temperature of the panel is detected (S31). The detected temperature of the panel is compared with a reference temperature (S32).

If the detected temperature is higher than the reference temperature, then the detected temperature corresponds to a high temperature condition and a noise determination reference is updated so as to correspond to the high temperature condition (S33). For example, when the noise determination reference is currently set to be a first noise determination reference at a first temperature, and if a second temperature higher than the first temperature is detected, then the noise determination reference may be updated to a second noise determination reference corresponding to the second temperature.

Noise of sensing signals may be removed according to the updated noise determination reference (S33).

If the detected temperature is lower than the reference temperature, noise of the sensing signals may be removed according to a noise determination reference that is previously set. In the above example, the noise of the sensing signals may be removed according to the first noise determination reference. Generally, it is difficult to calculate a touch location due to noise of a high temperature condition. Thus, according to one embodiment, the noise determination reference may be updated so as to correspond to the high temperature condition, but embodiments of the present invention are not limited thereto. That is, under a low temperature condition, the current noise determination reference may be reset as a noise determination reference corresponding to the low temperature condition, and noise of sensing signals may be removed according to the reset noise determination reference.

A touch location of an object may be calculated based on the sensing signals from which noise is removed (S35). An operation of a touch screen display apparatus is performed so as to correspond to the calculated touch location of the object (S36).

FIG. 9 shows a case where a noise determination reference is updated according to an external illumination level. Referring to FIG. 9, the external illumination level of a panel is detected (S41).

The detected illumination level is compared with a reference illumination level (S42). If the detected illumination level is lower than the reference illumination level, then the noise determination reference is updated so as to correspond to a low illumination level (S43). Generally, the sensitivity of a photo sensor is very low at a low illumination level, and thus a difference between sensing data and noise data is relatively small. According to one embodiment, the noise determination reference may be updated at a low illumination level, but embodiments of the present invention are not limited thereto. That is, the noise determination reference may be updated at a high illumination level, and noise of sensing signals may be removed according to the updated noise determination reference.

Otherwise, if the detected illumination level is higher than the reference illumination level, since the detected illumination level corresponds to a high illumination level condition, noise of the sensing signals is removed according to a noise determination reference that is previously set.

A touch location of an object is calculated based on the sensing signals from which noise is removed (S45).

An operation of a touch screen display apparatus is performed so as to correspond to the calculated touch location of the object (S46).

According to embodiments of the present invention, a noise determination reference may be updated in real time, and noise may be removed from sensing signals provided from a photo sensor according to the updated noise determination reference in real time. Thus, a touch location of an object may be more accurately calculated using the sensing signals from which noise is removed, thereby improving the reliability of a touch screen display apparatus.

In addition, a touch by an object may be accurately determined by detecting the touch by the object with a touch detector, and a touch location is calculated based on sensing signals provided from a photo sensor when the touch detector detects the touch by the object. Thus, detecting the touch and calculating the touch location are separate, and thus the touch location may be efficiently obtained.

In addition, other embodiments of the present invention can also be implemented through computer readable code/instructions in/on a medium, e.g., a computer readable medium, to control at least one processing element to implement any above described embodiment. The medium can correspond to any medium/media permitting the storage and/or transmission of the computer readable code.

The computer readable code can be recorded/transferred on a medium in a variety of suitable ways, with examples of the medium including recording media, such as magnetic storage media (e.g., ROM, floppy disks, hard disks, etc.), optical recording media (e.g., CD-ROMs, or DVDs), and transmission media such as Internet transmission media. Thus, the medium may be such a defined and measurable structure including or carrying a signal or information, such as a device carrying a bitstream according to one or more embodiments of the present invention. The media may also be a distributed network, so that the computer readable code is stored/transferred and executed in a distributed fashion. Furthermore, the processing element could include a processor or a computer processor, and processing elements may be distributed and/or integrally provided as a single device.

## Claims

1. A method of driving a touch screen display apparatus comprising a touch detector (200) for detecting a touch by an object (107), a panel (100) comprising a photo sensor unit (120) for capturing an image of the object (107) and a light emitting unit (110) for displaying an image, the method comprising:
generating (S11) an input signal ((a)) in response to the touch by the object (107) with the touch detector (200);
converting (S12) the input signal ((a)) into an output signal ((c)) by combining the input signal ((a)) and a reference signal ((b)),
- the reference signal ((b)) having a first signal level (H₂) during a plurality of enable periods (a) and a second signal level (L) during a plurality of disable periods (b) and
- the output signal ((c)) having a first signal level (H₃) during the plurality of enable periods (A) and a second signal level (L) during the plurality of disable periods (B),
- the first signal level (H₂) of the reference signal ((b)) being greater than the second signal level (L) of the reference signal ((b)) and
- the first signal level (H₃) of the output signal ((c)) being greater than the second signal level (L) of the output signal ((c));
updating (S13), during at least one disable period (B) of the output signal ((c)), a noise determination reference of a sensing signal provided from the photo sensor unit (120);
removing (S14), during an enable period (A) of the plurality of enable periods (A) of the output signal ((c)), noise from the sensing signal according to the updated noise determination reference; and
calculating (S15) a touch location of the object (107) based on the sensing signal from which noise is removed.

2. The method of claim 1, wherein the touch location of the object (107) is calculated during the enable period (A) of the output signal ((c)).

3. The method of one of the claims 1 or 2, further comprising detecting a temperature of the panel (100),
wherein the updating (S13) comprises updating (S13) the noise determination reference so as to correspond to the detected temperature.

4. The method of claim 3, further comprising comparing the detected temperature with a reference temperature,
wherein, when the detected temperature is higher than the reference temperature, the updating (S13) comprises updating (S13) the noise determination reference so as to reflect noise due to heat in the noise determination reference.

5. The method of claims 1 or 2, further comprising detecting an illumination level,
wherein the updating (S13) comprises updating (S13) the noise determination reference so as to correspond to the detected illumination level.

6. The method of claim 5, further comprising comparing the detected illumination level with a reference illumination level,
wherein, when the detected illumination level is less than the reference illumination level, the updating (S13) comprises updating (S13) the noise determination reference so as to reflect noise due to a low illumination level in the noise determination reference.

7. The method of one of the preceding claims, further comprising determining whether the input signal ((a)) is in a drag mode in which the input signal ((a)) is consecutively enabled, wherein the converting (S12) is performed when the input signal ((a)) is in the drag mode.

8. A computer readable recording medium having recorded thereon a program for executing the method of one of the preceding claims on the apparatus of one of
claims 9 to 16.

9. A touch screen display apparatus comprising:
a touch detector (200) adapted to detect a touch by an object (107) and to generate an input signal ((a)) in response to the detected touch by an object (107),
a panel (100) comprising photo sensor units (120) adapted to capture an image of the object (107) and a plurality of light emitting units (110) adapted to display an image;
a signal converter (210) adapted to convert the input signal ((a)) into an output signal ((c)) by combining the input signal ((a)) and a reference signal ((b)),
- the reference signal ((b)) having a first signal level (H₂) during a plurality of enable periods (a) an a second signal level (L) during a plurality of disable periods (b) and
- the output signal ((c)) having a first signal level (H₃) during the plurality of enable periods (A) and a second signal level (L) during the plurality of disable periods (B),
- the first signal level (H₂) of the reference signal ((b)) being greater than the second signal level (L) of the reference signal ((b)) and
- the first signal level (H₃) of the output signal ((c)) being greater than the second signal level (L) of the output signal ((c));
an updating unit (220) adapted to update a noise determination reference of a sensing signal provided from the photo sensor unit (120) during at least one disable period of the output signal ((c));
a noise remover (230) adapted to remove noise from the sensing signal according to the updated noise determination reference during an enable period of the enable periods (A) of the output signal ((c)); and a touch location calculator (240) adapted to calculate a touch location of the object (107) based on the sensing signal from which noise is removed.

10. The touch screen display apparatus of claim 9, wherein the touch location calculator (240) is configured to calculate the touch location of the object (107) during the enable period (A) of the output signal ((c)).

11. The touch screen display apparatus of one of the claims 9 or 10, wherein the noise remover (230) is configured to remove the noise from the sensing signal during the enable period of the enable periods of the output signal ((c)) following the at least one disable period of the output signal ((c)).

12. The touch screen display apparatus of one of the claims 10 or 11, further comprising a temperature detector (310) adapted to detect a temperature of the panel (100), wherein the updating unit (220) is configured to update the noise determination reference so as to correspond to the detected temperature during the at least one disable period of the output signal ((c)).

13. The touch screen display apparatus of claim 12, further comprising a first comparison unit adapted to compare the detected temperature with a reference temperature,
wherein the updating unit (220) is configured to update the noise determination reference so as to reflect noise due to heat in the noise determination reference when the detected temperature is higher than the reference temperature.

14. The touch screen display apparatus of one of the claims 9 through 11, further comprising an illumination level detector (320) adapted to detect an illumination level, wherein the updating unit (220) is configured to update the noise determination reference so as to correspond to the detected illumination level during the at least one disable period of the output signal ((c)).

15. The touch screen display apparatus of claim 14, further comprising a second comparison unit adapted to compare the detected illumination level with a reference illumination level,
wherein the updating unit (220) is configured to update the noise determination reference so as to reflect noise due to a low illumination level in the noise determination reference when the detected illumination level is less than the reference illumination level.

16. The touch screen display apparatus of one of the claims 9 through 15, further comprising a drag mode determination unit (205) adapted to determine whether the input signal ((a)) is in a drag mode in which the input signal ((a)) is consecutively enabled,
wherein the signal converter (210) is configured to convert the input signal ((a)) into the output signal ((c)) when the input signal ((a)) is in the drag mode.

## Patentansprüche

1. Verfahren zur Ansteuerung einer Anzeigevorrichtung mit Berührungsbildschirm, aufweisend einen Berührungsdetektor (200) zum Erkennen einer Berührung durch ein Objekt (107), eine Tafel (100), die eine Fotosensoreinheit (120) zum Aufnehmen eines Bildes des Objekts (107) und eine Lichtemissionseinheit (110) zum Anzeigen eines Bildes aufweist, wobei das Verfahren aufweist:
Erzeugen (S11) eines Eingangssignals ((a)) in Reaktion auf die Berührung durch das Objekt (107) mit dem Berührungsdetektor (200);
Umwandeln (S12) des Eingangssignals ((a)) in ein Ausgangssignal ((c)) durch Kombinieren des Eingangssignals ((a)) und eines Referenzsignals ((b)),
- wobei das Referenzsignal ((b)) einen ersten Signalpegel (H₂) während einer Vielzahl von Freigabeperioden (a) und einen zweiten Signalpegel (L) während einer Vielzahl von Sperrperioden (b) aufweist, und
- wobei das Ausgangssignal ((c)) einen ersten Signalpegel (H₃) während der Vielzahl der Freigabeperioden (A) und einen zweiten Signalpegel (L) während der Vielzahl der Sperrperioden (B) aufweist,
- wobei der erste Signalpegel (H₂) des Referenzsignals ((b)) größer als der zweite Signalpegel (L) des Referenzsignals ((b)) ist, und
- wobei der erste Signalpegel (H₃) des Ausgangssignals ((c)) größer als der zweite Signalpegel (L) des Ausgangssignals ((c)) ist;
während zumindest einer Sperrperiode (B) des Ausgangssignals ((c)) Aktualisieren (S13) einer Geräuschbestimmungsreferenz eines von der Fotosensoreinheit (120) gelieferten Erfassungssignals;
während einer Freigabeperiode (A) aus der Vielzahl der Freigabeperioden (A) des Ausgangssignals ((c)) Entfernen (S14) eines Geräuschs vom Erfassungssignal gemäß der aktualisierten Geräuschbestimmungsreferenz; und
Berechnen (S15) einer Berührungsstelle des Objekts (107) basierend auf dem Erfassungssignal, von dem das Geräusch entfernt wird.

2. Verfahren nach Anspruch 1, wobei die Berührungsstelle des Objekts (107) während der Freigabeperiode (A) des Ausgangssignals ((c)) berechnet wird.

3. Verfahren nach einem der Ansprüche 1 oder 2, ferner aufweisend Erkennen einer Temperatur der Tafel (100),
wobei das Aktualisieren (S 13) ein Aktualisieren (S 13) der Geräuschbestimmungsreferenz, so dass sie der erkannten Temperatur entspricht, aufweist.

4. Verfahren nach Anspruch 3, ferner aufweisend Vergleichen der erkannten Temperatur mit einer Referenztemperatur,
wobei, wenn die erkannte Temperatur höher als die Referenztemperatur ist, das Aktualisieren (S 13) ein Aktualisieren (S 13) der Geräuschbestimmungsreferenz, so dass sie ein Geräusch aufgrund von Wärme in der Geräuschbestimmungsreferenz reflektiert, aufweist.

5. Verfahren nach Anspruch 1 oder 2, ferner aufweisend Erkennen eines Beleuchtungspegels, wobei das Aktualisieren (S 13) ein Aktualisieren (S 13) der Geräuschbestimmungsreferenz, so dass sie dem erkannten Beleuchtungspegel entspricht, aufweist.

6. Verfahren nach Anspruch 5, ferner aufweisend Vergleichen des erkannten Beleuchtungspegels mit einem Referenzbeleuchtungspegel,
wobei, wenn der erkannte Beleuchtungspegel niedriger als der Referenzbeleuchtungspegel ist, das Aktualisieren (S 13) ein Aktualisieren (S 13) der Geräuschbestimmungsreferenz, so dass sie ein Geräusch aufgrund eines niedrigen Beleuchtungspegels in der Geräuschbestimmungsreferenz reflektiert, aufweist.

7. Verfahren nach einem der vorhergehenden Ansprüche, ferner aufweisend Bestimmen, ob das Eingangssignal ((a)) in einem Ziehmodus ist, in dem das Eingangssignal ((a)) nacheinander freigegeben wird, wobei das Umwandeln (S12) durchgeführt wird, wenn das Eingangssignal ((a)) im Ziehmodus ist.

8. Computerlesbares Aufzeichnungsmedium, das darauf aufgezeichnet ein Programm zur Durchführung des Verfahrens nach einem der vorhergehenden Ansprüche auf der Vorrichtung nach einem der Ansprüche 9 bis 16 aufweist.

9. Anzeigevorrichtung mit Berührungsbildschirm, aufweisend:
einen Berührungsdetektor (200), der angepasst ist, um eine Berührung durch ein Objekt (107) zu erkennen und ein Eingangssignal ((a)) in Reaktion auf die erkannte Berührung durch ein Objekt (107) zu erzeugen,
eine Tafel (100), die Fotosensoreinheiten (120), die angepasst sind, um ein Bild des Objekts (107) aufzunehmen, und eine Vielzahl von Lichtemissionseinheiten (110), die angepasst sind, um ein Bild anzuzeigen, aufweist;
einen Signalwandler (210), der angepasst ist, um durch Kombinieren des Eingangssignals ((a)) und eines Referenzsignals ((c)) das Eingangssignal ((a)) in ein Ausgangssignal ((c)) umzuwandeln,
- wobei das Referenzsignal ((b)) einen ersten Signalpegel (H₂) während einer Vielzahl von Freigabeperioden (a) und einen zweiten Signalpegel (L) während einer Vielzahl von Sperrperioden (b) aufweist, und
- wobei das Ausgangssignal ((c)) einen ersten Signalpegel (H₃) während der Vielzahl der Freigabeperioden (A) und einen zweiten Signalpegel (L) während der Vielzahl der Sperrperioden (B) aufweist,
- wobei der erste Signalpegel (H₂) des Referenzsignals ((b)) größer als der zweite Signalpegel (L) des Referenzsignals ((b)) ist, und
- wobei der erste Signalpegel (H₃) des Ausgangssignals ((c)) größer als der zweite Signalpegel (L) des Ausgangssignals ((c)) ist;
eine Aktualisierungseinheit (220), die angepasst ist, um eine Geräuschbestimmungsreferenz eines von der Fotosensoreinheit (120) gelieferten Erfassungssignals während zumindest einer Sperrperiode des Ausgangssignals ((c)) zu aktualisieren;
eine Geräuschentfernungseinrichtung (230), die angepasst ist, um ein Geräusch gemäß der aktualisierten Geräuschbestimmungsreferenz während einer Freigabeperiode der Freigabeperioden (A) des Ausgangssignals ((c)) vom Erfassungssignal zu entfernen; und eine Berührungsstellen-Berechnungseinrichtung (240), die angepasst ist, um eine Berührungsstelle des Objekts (107) basierend auf dem Erfassungssignal, von dem das Geräusch entfernt wird, zu berechnen.

10. Anzeigevorrichtung mit Berührungsbildschirm nach Anspruch 9, wobei die Berührungsstellen-Berechnungsvorrichtung (240) konfiguriert ist, um die Berührungsstelle des Objekts (107) während der Freigabeperiode (A) des Ausgangssignals ((c)) zu berechnen.

11. Anzeigevorrichtung mit Berührungsbildschirm nach einem der Ansprüche 9 oder 10, wobei die Geräuschentfernungsvorrichtung (230) konfiguriert ist, um das Geräusch während der Freigabeperiode der Freigabeperioden des Ausgangssignals ((c)), die der zumindest einen Sperrperiode des Ausgangssignals ((c)) folgt, vom Erfassungssignal zu entfernen.

12. Anzeigevorrichtung mit Berührungsbildschirm nach einem der Ansprüche 10 oder 11, ferner aufweisend einen Temperaturfühler (310), der angepasst ist, um eine Temperatur der Tafel (100) zu erkennen, wobei die Aktualisierungseinheit (220) konfiguriert ist, um während der zumindest einen Sperrperiode des Ausgangssignals ((c)) die Geräuschbestimmungsreferenz zu aktualisieren, so dass sie der erkannten Temperatur entspricht.

13. Anzeigevorrichtung mit Berührungsbildschirm nach Anspruch 12, ferner aufweisend eine erste Vergleichseinheit, die angepasst ist, um die erkannte Temperatur mit einer Referenztemperatur zu vergleichen,
wobei die Aktualisierungseinheit (220) konfiguriert ist, um die Geräuschbestimmungsreferenz zu aktualisieren, so dass sie aufgrund von Wärme in der Geräuschbestimmungsreferenz ein Geräusch reflektiert, wenn die erkannte Temperatur höher als die Referenztemperatur ist.

14. Anzeigevorrichtung mit Berührungsbildschirm nach einem der Ansprüche 9 bis 11, ferner aufweisend einen Beleuchtungspegeldetektor (320), der angepasst ist, um einen Beleuchtungspegel zu erkennen,
wobei die Aktualisierungseinheit (220) konfiguriert ist, um die Geräuschsbestimmungsreferenz während der zumindest einen Sperrperiode des Ausgangssignals ((c)) zu aktualisieren, so dass sie dem erkannten Beleuchtungspegel entspricht.

15. Anzeigevorrichtung mit Berührungsbildschirm nach Anspruch 14, ferner aufweisend eine zweite Vergleichseinheit, die angepasst ist, um den erkannten Beleuchtungspegel mit einem Referenzbeleuchtungspegel zu vergleichen, wobei die Aktualisierungseinheit (220) konfiguriert ist, um die Geräuschbestimmungsreferenz zu aktualisieren, so dass sie ein Geräusch aufgrund eines niedrigen Beleuchtungspegels in der Geräuschsbestimmungsreferenz reflektiert, wenn der erkannte Beleuchtungspegel niedriger als der Referenzbeleuchtungspegel ist.

16. Anzeigevorrichtung mit Berührungsbildschirm nach einem der Ansprüche 9 bis 15, ferner aufweisend eine Ziehmodus-Bestimmungseinheit (205), die angepasst ist, um zu bestimmen, ob das Eingangssignal ((a)) in einem Ziehmodus ist, in dem das Eingangssignal ((a)) nacheinander freigegeben wird,
wobei der Signalwandler (210) konfiguriert ist, um das Eingangssignal ((a)) in das Ausgangssignal ((c)) umzuwandeln, wenn das Eingangssignal ((a)) im Ziehmodus ist.

## Revendications

1. Procédé de commande d'un appareil d'affichage à écran tactile comprenant un détecteur tactile (200) pour détecter un toucher par un objet (107), un panneau (100) comprenant une unité de capteur photosensible (120) pour capturer une image de l'objet (107) et une unité d'émission de lumière (110) pour afficher une image, le procédé comprenant le fait :
de générer (S11) un signal d'entrée ((a)) en réponse au toucher par l'objet (107) avec le détecteur tactile (200) ;
de convertir (S12) le signal d'entrée ((a)) en un signal de sortie ((c)) en combinant le signal d'entrée ((a)) et un signal de référence ((b)),
- le signal de référence ((b)) ayant un premier niveau de signal (H₂) au cours d'une pluralité de périodes de validation (a) et un deuxième niveau de signal (L) au cours d'une pluralité de périodes d'invalidation (b), et
- le signal de sortie ((c)) ayant un premier niveau de signal (H₃) au cours de la pluralité de périodes de validation (A) et un deuxième niveau de signal (L) au cours de la pluralité de périodes d'invalidation (B),
- le premier niveau de signal (H₂) du signal de référence ((b)) étant supérieur au deuxième niveau de signal (L) du signal de référence ((b)), et
- le premier niveau de signal (H₃) du signal de sortie ((c)) étant supérieur au deuxième niveau de signal (L) du signal de sortie ((c)) ;
de mettre à jour (S13), au cours d'au moins une période d'invalidation (B) du signal de sortie ((c)), une référence de détermination de bruit d'un signal de détection fourni à partir de l'unité de capteur photosensible (120) ;
de supprimer (S14), au cours d'une période de validation (A) de la pluralité de périodes de validation (A) du signal de sortie ((c)), un bruit du signal de détection en fonction de la référence de détermination de bruit mise à jour ; et
de calculer (S15) un emplacement de toucher de l'objet (107) sur la base du signal de détection duquel le bruit est supprimé.

2. Procédé de la revendication 1, dans lequel l'emplacement de toucher de l'objet (107) est calculé au cours de la période de validation (A) du signal de sortie ((c)).

3. Procédé de l'une des revendications 1 et 2, comprenant en outre le fait de détecter une température du panneau (100),
dans lequel la mise à jour (S13) comprend le fait de mettre à jour (S13) la référence de détermination de bruit de manière à correspondre à la température détectée.

4. Procédé de la revendication 3, comprenant en outre le fait de comparer la température détectée à une température de référence,
dans lequel, lorsque la température détectée est supérieure à la température de référence, la mise à jour (S13) comprend le fait de mettre à jour (S13) la référence de détermination de bruit de manière à refléter le bruit dû à la chaleur dans la référence de détermination de bruit.

5. Procédé de la revendication 1 ou 2, comprenant en outre le fait de détecter un niveau d'éclairage,
dans lequel la mise à jour (S13) comprend le fait de mettre à jour (S13) la référence de détermination de bruit de manière à correspondre au niveau d'éclairage détecté.

6. Procédé de la revendication 5, comprenant en outre le fait de comparer le niveau d'éclairage détecté à un niveau d'éclairage de référence,
dans lequel, lorsque le niveau d'éclairage détecté est inférieur au niveau d'éclairage de référence, la mise à jour (S13) comprend le fait de mettre à jour (S13) la référence de détermination de bruit de manière à refléter le bruit dû à un niveau d'éclairage faible dans la référence de détermination de bruit.

7. Procédé de l'une des revendications précédentes, comprenant en outre le fait de déterminer si le signal d'entrée ((a)) se trouve dans un mode de glissement dans lequel le signal d'entrée ((a)) est consécutivement validé, où la conversion (S12) est effectuée lorsque le signal d'entrée ((a)) est dans le mode de glissement.

8. Support d'enregistrement lisible par ordinateur sur lequel est enregistré un programme pour exécuter le procédé de l'une des revendications précédentes sur l'appareil de l'une des revendications 9 à 16.

9. Appareil d'affichage à écran tactile comprenant :
un détecteur tactile (200) adapté pour détecter un toucher par un objet (107) et pour générer un signal d'entrée ((a)) en réponse au toucher détecté par un objet (107),
un panneau (100) comprenant des unités de capteur photosensible (120) adaptées pour capturer une image de l'objet (107) et une pluralité d'unités d'émission de lumière (110) adaptées pour afficher une image ;
un convertisseur de signal (210) adapté pour convertir le signal d'entrée ((a)) en un signal de sortie ((c)) en combinant le signal d'entrée ((a)) et un signal de référence ((b)),
- le signal de référence ((b)) ayant un premier niveau de signal (H₂) au cours d'une pluralité de périodes de validation (a) et un deuxième niveau de signal (L) au cours d'une pluralité de périodes d'invalidation (b), et
- le signal de sortie ((c)) ayant un premier niveau de signal (H₃) au cours de la pluralité de périodes de validation (A) et un deuxième niveau de signal (L) au cours de la pluralité de périodes d'invalidation (B),
- le premier niveau de signal (H₂) du signal de référence ((b)) étant supérieur au deuxième niveau de signal (L) du signal de référence ((b)), et
- le premier niveau de signal (H₃) du signal de sortie ((c)) étant supérieur au deuxième niveau de signal (L) du signal de sortie ((c)) ;
une unité de mise à jour (220) adaptée pour mettre à jour une référence de détermination de bruit d'un signal de détection fourni à partir de l'unité de capteur photosensible (120) au cours d'au moins une période d'invalidation du signal de sortie ((c)) ;
un suppresseur de bruit (230) adapté pour supprimer un bruit du signal de détection en fonction de la référence de détermination de bruit mise à jour au cours d'une période de validation des périodes de validation (A) du signal de sortie ((c)) ; et un calculateur d'emplacement de toucher (240) adapté pour calculer un emplacement de toucher de l'objet (107) sur la base du signal de détection duquel le bruit est supprimé.

10. Appareil d'affichage à écran tactile de la revendication 9, dans lequel le calculateur d'emplacement de toucher (240) est configuré pour calculer l'emplacement de toucher de l'objet (107) au cours de la période de validation (A) du signal de sortie ((c)).

11. Appareil d'affichage à écran tactile de l'une des revendications 9 et 10, dans lequel le suppresseur de bruit (230) est configuré pour supprimer le bruit du signal de détection au cours de la période de validation des périodes de validation du signal de sortie ((c)) après l'au moins une période d'invalidation du signal de sortie ((c)).

12. Appareil d'affichage à écran tactile de l'une des revendications 10 et 11, comprenant en outre un détecteur de température (310) adapté pour détecter une température du panneau (100), où l'unité de mise à jour (220) est configurée pour mettre à jour la référence de détermination de bruit de manière à correspondre à la température détectée au cours de l'au moins une période d'invalidation du signal de sortie ((c)).

13. Appareil d'affichage à écran tactile de la revendication 12, comprenant en outre une première unité de comparaison adaptée pour comparer la température détectée à une température de référence,
dans lequel l'unité de mise à jour (220) est configurée pour mettre à jour la référence de détermination de bruit de manière à refléter le bruit dû à la chaleur dans la référence de détermination de bruit lorsque la température détectée est supérieure à la température de référence.

14. Appareil d'affichage à écran tactile de l'une des revendications 9 à 11, comprenant en outre un détecteur de niveau d'éclairage (320) adapté pour détecter un niveau d'éclairage, où l'unité de mise à jour (220) est configurée pour mettre à jour la référence de détermination de bruit de manière à correspondre au niveau d'éclairage détecté au cours de l'au moins une période d'invalidation du signal de sortie ((c)).

15. Appareil d'affichage à écran tactile de la revendication 14, comprenant en outre une deuxième unité de comparaison adaptée pour comparer le niveau d'éclairage détecté à un niveau d'éclairage de référence,
dans lequel l'unité de mise à jour (220) est configurée pour mettre à jour la référence de détermination de bruit de manière à refléter le bruit dû à un niveau d'éclairage faible dans la référence de détermination de bruit lorsque le niveau d'éclairage détecté est inférieur au niveau d'éclairage de référence.

16. Appareil d'affichage à écran tactile de l'une des revendications 9 à 15, comprenant en outre une unité de détermination de mode de glissement (205) adaptée pour déterminer si le signal d'entrée ((a)) est dans un mode de glissement dans lequel le signal d'entrée ((a)) est consécutivement validé,
dans lequel le convertisseur de signal (210) est configuré pour convertir le signal d'entrée ((a)) en signal de sortie ((c)) lorsque le signal d'entrée ((a)) est dans le mode de glissement.
